# EUROPEAN PATENT APPLICATION

(11) **EP 4 813 202 A1**
(43) Date of publication of application: **30.09.2026**
(21) Application number: 25382285.2
(22) Date of filing: 26.03.2025
(51) Int. Cl.: A01K 29/00, A01K 45/00, B65F 1/00, A22B 7/00

(54) **SYSTEM AND METHOD FOR RECOGNITION OF OVERFILLING OF A DEAD LIVESTOCK CONTAINER**

(71) Applicant: Second Life Collect Systems, SL, 25003 Lleida (ES)
(72) Inventor: ROCA ENRICH, Ramon, 25003 Lleida (ES); CODINA RELATS, David, 25003 Lleida (ES)
(74) Representative: Torner, Juncosa I Associats, SL

(57) **Abstract**

System for recognition of overfilling of a dead livestock container (1) configured to receive dead livestock, comprising a refrigeration chamber (4) to enclose and maintaining the container (1) refrigerated, the refrigeration chamber having a door (5) and a door actuation unit to open and close the door (5), and a container transportation unit that moves the dead livestock container from a loading site, to the inside of the refrigeration chamber (4). The system further includes at least one sensor operatively connected to a computing device configured to determine when the content of the dead livestock container (1) is full enough and needs to be collected, the sensor comprising a first transversal light barrier (6) arranged inside the refrigeration chamber above the upper edge (1a) of the container (1) when the container (1) is located at least in part inside the refrigeration chamber (4).

## Description

### Technical field

The present invention relates to a system for recognition of overfilling of a dead livestock container that is used in conjunction with an assembly comprising a refrigeration chamber dimensioned to enclose and maintaining the container refrigerated, the refrigeration chamber being provided with a door and the assembly including a container transportation unit configured to transfer the dead livestock container from a loading site, in which the dead animals are loaded by a farmer into the container ,to the interior of the refrigeration chamber and from the refrigeration chamber to the loading site while the door is open, for further loading or for collection of the filled container.

The proposed system for recognition of overfilling of a dead livestock container has application in the field of animal husbandry on farms, such as pig, sheep, goat, poultry, and rabbit farming, among others.

The invention also refers to a method for determining overfilling of a dead livestock container in the referred context, which provides a warning signal for the collection of the dead livestock container from the refrigeration chamber when the dead livestock container is sufficiently full.

### Background of the Invention

For the collection of dead livestock, i.e. farm animals, it is common to have a container located at a collection site close to a delimiting perimeter of the farm and into which the farmer deposits the dead livestock, and a collection vehicle with a collection box with a top loading opening and a loading mechanism configured to pick the container up at the collection site, lift and tip the container to unload the dead livestock into the collection box through the top loading opening, and return the container to the collection site.

According to this conventional system, the farmer notifies a collection control station in charge of scheduling the collection routes of the collection vehicle when the farmer considers that the container is full or that a maximum recommended time has elapsed since the first dead animal was deposited.

CN111003432 A1 belongs to the technical field of environmental protection equipment and relates to a collection point material box access system. The farmers send sick and dead livestock and poultry to a feed box that after a storage time is over the feed box enters a cold storage to be frozen and transported through a bottom conveyor system.

EP4378307 A1 discloses a dead livestock collection system comprising a container located at a collection or loading site close to a delimiting perimeter of a farm, configured for receiving dead livestock loaded by a farmer and a refrigeration chamber dimensioned to temporarily enclose a loaded container, the refrigeration chamber being provided with a door next to the collection site, the door being equipped with a door actuation unit to be opened and closed. A refrigeration unit is arranged to maintain the refrigeration chamber at or below a predetermined temperature while its door is closed. The system further comprises a container translation unit configured to move a dead livestock container from a collection site to the refrigeration chamber and from the refrigeration chamber to the collection site while the door is open.

The present invention is included in the context of the cited EP4378307 A1 and represents an improvement that affects the activities of management of the operations of loading of dead animals in the dead livestock container and of the transferring them from a loading site to the inside of the refrigeration chamber, avoiding overfilling of a dead livestock container and therefore providing an optimization of the operations of handling and transferring the dead livestock container into and out of the refrigerated chamber.

### Description of the Invention

The present invention concerns a system for recognition of overfilling of a dead livestock container as defined in claim 1, involving the following elements already known in the art:
- a dead livestock container located at a loading site and configured to receive dead livestock that are transported by a livestock farmer to said loading site, said dead livestock container having a main body with an upper and a lower edge;
- a refrigeration chamber adjacent to said loading site, dimensioned to enclose and maintaining the dead livestock container refrigerated, the refrigeration chamber being provided with a door movable between an open and a closed position;
- a door actuation unit of the refrigeration chamber arranged to open and close the door, the refrigeration chamber together with the door in the closed position, defining a plurality of surfaces enclosing the dead livestock container;
- a container transportation unit configured to move the dead livestock container from a first position, in which the dead livestock container is located in the loading site, to a second position, in which the dead livestock container is completely contained in the refrigeration chamber, thereby defining a direction of introduction; and from the second position to the first position, while the door is open; and
- a sensor or detection device operatively connected to a computing device configured to determine, in cooperation with the sensor, at least, when the content of the dead livestock container is full enough and needs to be collected;

According to this invention the referred sensor comprises a first light barrier arranged inside the refrigeration chamber above the upper edge of the dead livestock container at a first distance from it, when the dead livestock container is located at least in part inside the refrigeration chamber.

In this way, the first light barrier can detect portions of an animal protruding from the upper edge of the dead livestock container, indicating a possible overfilling of the container, during the introduction of the container into the refrigeration chamber, and send in cooperation with the computing unit a warning signal to pick up a sufficiently full container.

According to an embodiment of this invention the first light barrier is transversal to the direction of introduction of the container into the chamber and comprises at least one emitter and one receiver directly opposed to each other and located on two opposite surfaces of the refrigeration chamber.

As per a preferred embodiment the system of the invention further includes a second light barrier, transversal to the direction of introduction of the container and comprising at least one emitter and one receiver directly opposed to each other and located on two opposite surfaces of the refrigeration chamber, this second light barrier being arranged below the upper edge of the dead livestock container at a second distance from it.

With this arrangement of the second light barrier, the dead livestock container always interferes with the second light barrier when being moved from the loading site to the refrigeration chamber or from the refrigeration chamber to the loading site, and the dead livestock container does not interfere with the second light barrier when the dead livestock container is in the first (loading site) or in the second position (inside the refrigeration chamber).

As per one embodiment the second light barrier is arranged above the lower edge or bottom of the dead livestock container, i.e. above a container wheels or a container transport platform.

In addition, the referred computing device of the system is configured to determine, in cooperation with the second light barrier, whether the dead livestock container is in the first position, in the second position or in an intermediate position between the two.

The door of the refrigeration chamber may be a sliding door, or a door hinged at a lower edge of an entrance to the refrigeration chamber.

In a preferred embodiment of the invention the actuation unit that open and closes the door of the refrigeration chamber, comprises one or more cylinders hydraulically powered, e.g. from an oil-hydraulic unit, but can also be in an alternative embodiment electrically powered, i.e. implemented by an electrical linear actuator.

As previously indicated the invention also refers to a method for determining overfilling of a dead livestock container comprising the steps of:
- providing a system for recognition of overfilling of a dead livestock container according to the above-described features;
- opening the door of the refrigeration chamber with the door actuation unit;
- moving the dead livestock container, after a load of it, from the first or loading position to the second position inside the refrigeration chamber by the container transportation unit;
- sensing with the first light barrier during said step of moving the dead livestock container, whether the content of the dead livestock container protrudes from its upper edge by one or more interferences with the first light barrier; and
- determining by the computing device that the dead livestock container is overfilled if the content protruding from its upper edge exceeds a predetermined threshold.

To implement the proposed method the computing device measures the time in which the content protruding from the upper edge of the dead livestock container interferes with the first light barrier while the container is being moved from the first position of loading of the dead livestock to the second position of storage inside the refrigeration chamber, thereby defining a first interference time. As several interferences with the first light barrier can occur the first interference time will be the result of the addition of several interference times.

The computing device in a preferred embodiment further measures the time in which the dead livestock container obstructs the second light barrier while the container is being moved from the first position of loading of the dead livestock to the second position of storage inside the refrigeration chamber or from the refrigeration chamber to the collection site, thereby defining a second interference time.

In this preferred embodiment the computing device after obtaining the first and second interference time operates with the time values dividing the first interference time by the second interference time, thereby defining an interference ratio, and after that the computing device determines that the dead livestock container is overfilled if the interference ratio exceeds a predetermined value, and if it is the case in a last step a collection message is sent to a collection control station when the computing device has determined, that the dead livestock container is overfilled.

The predetermined value at which the interference ratio is considered to be in excess depends on the type of animal stored in the dead livestock container.

It will be understood that references to geometric positions, such as parallel, transversal perpendicular, tangent, etc. allow deviations up to ± ° from the theoretical position defined by this nomenclature.

It will also be understood that any range of values given may not be optimal in extreme values and may require adaptations of the invention to these extreme values are applicable, such adaptations being within reach of a skilled person.

### Brief description of the Figures

The foregoing and other advantages and features will be more fully understood from the following detailed description of an embodiment with reference to the accompanying drawings, to be taken in an illustrative and non-limitative manner, in which:
Fig. 1 is a schematic drawing in lateral elevation showing a refrigeration chamber and a container arranged on a platform at a loading site in front of an entrance of the refrigeration chamber.
Fig. 2 shows schematically in lateral elevation the referred container arranged inside of the refrigeration chamber.

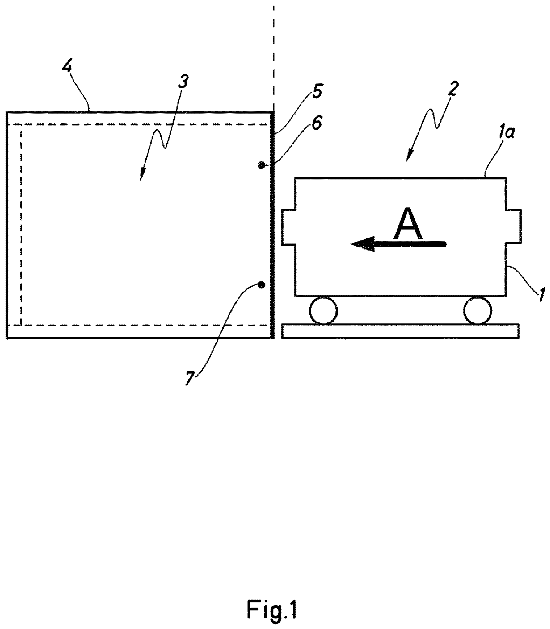

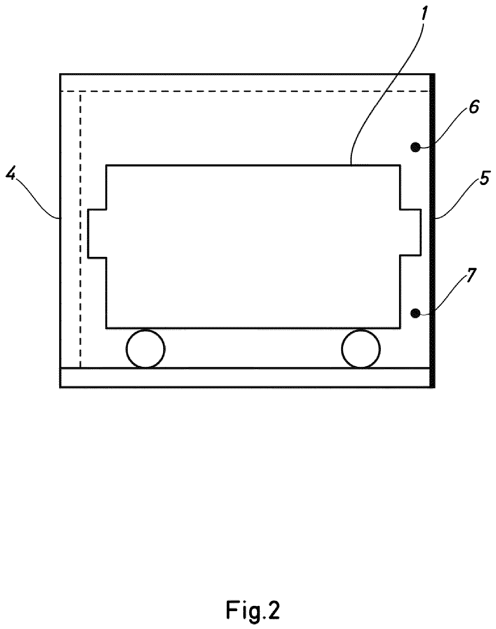

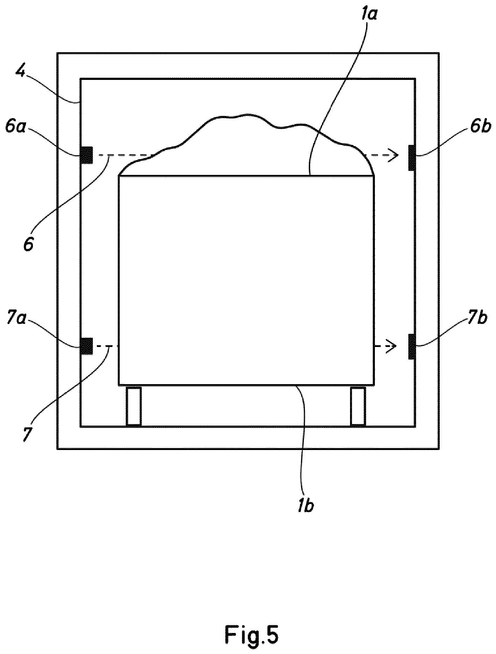

In both Figs. 1 and 2, two light transversal light barriers, at different heights have been indicated provided by corresponding light emitter/receiver directly opposite each other (see Fig. 5) and located on two opposite surfaces of the refrigeration chamber.

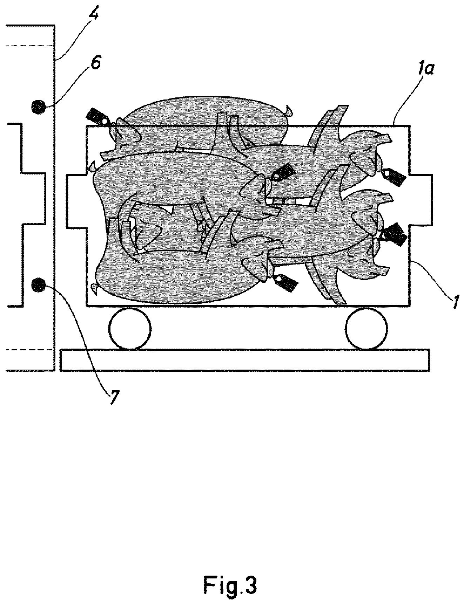

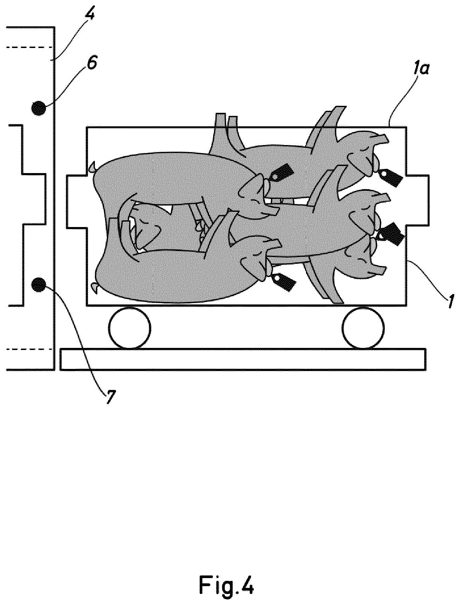

Fig. 3 and Fig. 4 show schematically two containers of dead livestock (in this case of pigs) with different volume and loading conditions, the dead livestock container being arranged in front of the refrigeration chamber only partially depicted.

In the Figs. 1 to 4 the transversal light barriers are indicated by thick black dots as the light barriers are perpendicular to the drawing plane.

In the Fig. 5 a state of introduction of the dead livestock container into the refrigeration chamber has been illustrated with interruption of the two light barriers, one of them by a protruding part of the load with respect to the container upper edge, and the second light barrier being interrupted by the container body itself.

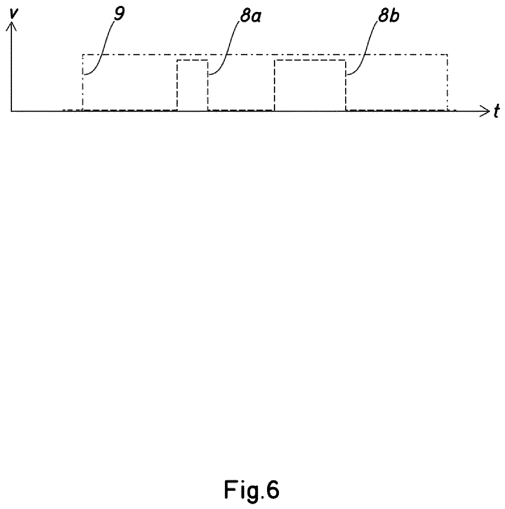

Fig. 6 is a is a graph showing the voltage levels generated by the receivers of the light barriers and the interruption times of each of the two light barriers during the introduction of a loaded dead livestock container into the refrigeration chamber, and that allows to establish a ratio between the interference times to implement the method as explained above.

### Detailed Description of the Invention and of particular embodiments

Figs. 1 and 2 show a refrigeration chamber 4 and next to it , in this embodiment a wheeled container 1 configured to receive dead livestock, said dead livestock container 1 having a main body with an upper and lower edge.

The refrigeration chamber 4 is dimensioned to be able to enclose and maintaining the dead livestock container 1 refrigerated, the refrigeration chamber being provided with a door 5, that can be a slidable door or a hinged door, in any case associated to a door actuation unit arranged to open and close the door 5 of the refrigeration chamber 4 that together with the door 5 in the closed position, define a plurality of surfaces enclosing the dead livestock container 1.

In embodiments where the door 5 is a hinged door, the door is preferably hinged at the lower end of the refrigeration chamber 4, allowing it to move from a closed position to an open position, and vice versa. Embodiments with a hinged door may also comprise guides for guiding the movement of the dead livestock container 1 from a first position 2, in which the dead livestock container 1 is located at a loading site, to a second position 3, in which the dead livestock container 1 is completely contained in the refrigeration chamber 4, and vice versa. In embodiments with a hinged door, the loading site is preferably located on the door whet it is in the open position.

The proposed system according to the state of the art is completed by:
- a container transportation unit configured to move the dead livestock container 1 from a first position 2, in which the dead livestock container is located in a loading site, prepared to be loaded, to a second position 3, in which the dead livestock container is completely contained in the refrigeration chamber 4, thereby defining a direction of introduction (arrow A in Fig. 1); and from the second position 3 to the first position 2, while the door is open; and
- at least one sensor operatively connected to a computing device configured to determine, in cooperation with the at least one sensor, at least, when the content of the dead livestock container 1 is full enough and needs to be collected;

The cited container transportation unit can involve means for dragging or pushing the wheeled container or the supporting platform.

According to this invention the at least one sensor comprises a first light barrier 6 (see Fig. 5) arranged inside the refrigeration chamber 4 above the upper edge 1a of the dead livestock container 1 at a first distance from it, when the dead livestock container 1 is located, at least in part, inside the refrigeration chamber 4.

As clearly shown in the Fig. 5 the first light barrier 6 is transversal to the direction of introduction of the dead livestock container 1 into the refrigeration chamber 4 and comprises at least one emitter 6a and one receiver 6b directly opposed to each other and located on two opposite surfaces of the refrigeration chamber 4.

Fig. 5 also illustrates that the proposed system further comprises a second light barrier 7 transversal to the direction of introduction of the dead livestock container 1 into the refrigeration chamber 4. This second light barrier also comprises one emitter 7a and one receiver 7b directly opposed to each other and located on two opposite surfaces of the refrigeration chamber 4. This second light barrier 7 is arranged below the upper edge 1a of the dead livestock container at a second distance from it, so that the dead livestock container 1a always interferes with the second light barrier 7 when the dead livestock container 1 being moved from the first position 2 or loading site to the inside or second position 3 of the refrigeration chamber 4 and from the inside of the refrigeration chamber 4 to the loading site 2.

In the disclosed embodiments the second light barrier 7 is arranged above the lower edge 1b of the dead livestock container 1.

In this way the second light barrier 7 is arranged so that the dead livestock container 7 does not interfere with the second light barrier 7 when the dead livestock container 1 is in the first 2 or in the second 3 position.

In addition, the computing device is configured to determine, in cooperation with the second light barrier 7, whether the dead livestock container is in the first position 2, in the second position 3 or in an intermediate position between the two.

The invention also refers to a method for determining overfilling of a dead livestock container comprising the steps of:
- providing a system with the components above described
- opening the door 5 of the refrigeration chamber 4 with the door actuation unit;
- moving the dead livestock container 1 after a load of dead livestock on the loading site from the first position 2 to the second position 3 by the container transportation unit;
- sensing with the first light barrier 6 during said step of moving the dead livestock container 1 whether the content of the dead livestock container 1 protrudes from its upper edge 1a by interference with said first light barrier 6; and
- determining by the computing device that the dead livestock container 1 is overfilled if the content protruding from its upper edge 1a exceeds a predetermined threshold.

To implement the proposed method the computing device measures the time or times 8a, 8b in which the content protruding from the upper edge 1a of the dead livestock container 1 interferes with the first light barrier 6 while the dead livestock container 1 is being moved from the first position 2 or loading site to the second position 3 inside the refrigeration chamber 4, thereby defining a first interference time with the addition of the times 8a, 8b.

The computing device further measures the time in which the dead livestock container 1 obstructs the second light barrier 7 while the dead livestock container 1 is being moved from the first position 2 to the second position 3, or from the second position 3 inside of the refrigeration chamber 4 to the first position 3 or loading site, thereby defining a second interference time 9.

In a preferred embodiment the computing device performs a division of the total first interference times 8a + 8b +... by the second interference time 9, thereby defining an interference ratio, and the computing device determines that the dead livestock container is overfilled if the interference ratio exceeds a predetermined value.

The total first interference times 8a + 8b + ... will depend on the size and weight of the dead animals as well as the particular arrangement of the dead animals inside the dead livestock container 1.

On the ordinate/abscissa graph of Fig. 5, it is represented in the Y coordinate the voltage of the signal generated by the receivers of the light barriers and in the X coordinate the times 8a, 8b of interference of the dead livestock container 1 with the first light barrier as well as the time 9 of interference of the dead livestock container 1 with the second light barrier 7.

The referred predetermined value that triggers the warning signal is made dependent on the type of animal stored in the dead livestock container.

Once a state of overfilling has been detected by calculated interference ratio a collection message is sent to a collection control station when the computing device has determined that the dead livestock container 1 is overfilled.

## Claims

1. System for recognition of overfilling of a dead livestock container comprising:
- a dead livestock container (1) configured to receive dead livestock, said dead livestock container having a main body with an upper and a lower edge;
- a refrigeration chamber (4) dimensioned to enclose and maintaining the dead livestock container (1) refrigerated, the refrigeration chamber being provided with a door (5);
- a door actuation unit of the refrigeration chamber (4) arranged to open and close the door (5), the refrigeration chamber (4) together with the door (5) in the closed position, defining a plurality of surfaces enclosing the dead livestock container (1);
- a container transportation unit configured to move the dead livestock container from a first position (2), in which the dead livestock container (1) is located at a loading site, to a second position (3), in which the dead livestock container (1) is completely contained in the refrigeration chamber (4), thereby defining a direction of introduction; and from the second position (3) to the first position (2), while the door is open; and
- at least one sensor operatively connected to a computing device configured to determine, in cooperation with the at least one sensor, at least, when the content of the dead livestock container (1) is full enough and needs to be collected;
**characterised in that** the at least one sensor comprises a first light barrier (6) arranged inside the refrigeration chamber at a level above the upper edge (1a) of the dead livestock container (1) at a first distance from it, when the dead livestock container (1) is located at least in part inside the refrigeration chamber (4).

2. System, according to claim 1, wherein the first light barrier (6) is transversal to the direction of introduction of the dead livestock container (1) into the refrigeration chamber (4) and comprises at least one emitter (6a) and one receiver (6b) directly opposed to each other and located on two opposite surfaces of the refrigeration chamber (4).

3. System, according to claim 1 or 2, further comprising a second light barrier (7) transversal to the direction of introduction of the dead livestock container (1) into the refrigeration chamber (4), comprising at least one emitter (7a) and one receiver (7b) directly opposed to each other and located on two opposite surfaces of the refrigeration chamber (4) and the second light barrier (7) arranged below the upper edge (1a) of the dead livestock container at a second distance from it, so that the dead livestock container (1) interferes with the second light barrier (7) when being moved from the first position (2) or loading site to the inside of the refrigeration chamber (4) or second position (3) and from the inside of the refrigeration chamber (4) to the loading site (2).

4. System, according to claim 3, wherein the second light barrier (7) is arranged above the lower edge (1b) of the dead livestock container (1).

5. System, according to claim 4, wherein the second light barrier (7) is arranged so that the dead livestock container (7) does not interfere with the second light barrier (7) when the dead livestock container (1) is in the first (2) or in the second (3) position.

6. System, according to claim 5, wherein the computing device is configured to determine, in cooperation with the second light barrier (7), whether the dead livestock container is in the first position (2), in the second position (3) or in an intermediate position between the two.

7. Method for determining overfilling of a dead livestock container comprising the steps of:
- providing a system according to any one of claims 1 to 6;
- opening the door (5) of the refrigeration chamber with the door actuation unit;
- moving the dead livestock container from a second position (3), in which the dead livestock container (1) is completely contained in the refrigeration chamber (4), to a first position (2), in which the dead livestock container (1) is located at a loading site;
- moving the dead livestock container (1) after a load of dead livestock on the loading site from the first position (2) to the second position (3) by the container transportation unit;
- sensing with the first light barrier (6) during said step of moving the dead livestock container (1) whether the content of the dead livestock container (1) protrudes from its upper edge (1a) by interference with said first light barrier (6);
- determining by the computing device that the dead livestock container (1) is overfilled if the content protruding from its upper edge (1a) exceeds a predetermined threshold.

8. Method, according to claim 7, wherein the computing device measures the time in which the content protruding from the upper edge (1a) of the dead livestock container (1) interferes with the first light barrier (6) while the dead livestock container (1) is being moved from the first position (2) to the second position (3), thereby defining a first interference time (8).

9. Method, according to claim 8, wherein the computing device further measures the time in which the dead livestock container (1) obstructs the second light barrier (7) while the dead livestock container (1) is being moved from the first position (2) to the second position (3) or from the second position (3) inside of the refrigeration chamber (4) to the first position (2) or loading site, thereby defining a second interference time (9).

10. Method, according to claim 9, wherein the computing device performs a division of the first interference time (8) by the second interference time (9), thereby defining an interference ratio, and the computing device determines that the dead livestock container is overfilled if the interference ratio exceeds a predetermined value.

11. Method, according to claim 10, wherein the predetermined value is made dependent on the type of animal stored in the dead livestock container

12. Method, according to any claim 7 to 11, further comprising the step of sending a collection message to a collection control station when the computing device has determined, that the dead livestock container (1) is overfilled.
